# EUROPÄISCHE PATENTSCHRIFT

(11) **EP 2 746 138 B1**
(45) Veröffentlichungstag und Bekanntmachung des Hinweises auf die Patenterteilung: **22.07.2015**
(21) Anmeldenummer: 13005438.0
(22) Anmeldetag: 19.11.2013
(51) Int. Cl.: B62D 15/02, G08G 1/16

(54) **Fahrerassistenzsystem und Verfahren zum Freigeben eines autonomen oder pilotierten Garagenparkens**
Driver assistance system and method for enabling autonomous or piloted parking in a garage
Système d'assistance au conducteur et procédé d'autorisation de parcage autonome ou piloté dans un garage

(30) Priorität: 22.12.2012 DE 102012025317
(43) Veröffentlichungstag der Anmeldung: 25.06.2014
(73) Patentinhaber: AUDI AG, 85045 Ingolstadt (DE)
(72) Erfinder: Reichel, Michael, 85049 Ingolstadt (DE); Bouzouraa, Mohamed Essayed, 85051 Ingolstadt (DE)
(74) Vertreter: Thielmann, Frank

(56) Entgegenhaltungen:
- EP-A2- 2 302 608
- CN-A- 102 407 848
- DE-A1- 10 331 948
- US-A- 5 764 015

## Beschreibung

Die vorliegende Erfindung betrifft ein Fahrerassistenzsystem und Verfahren zum Freigeben eines autonomen oder pilotierten Garagenparkens.

Einen bedeutenden Aspekt auf dem Gebiet der Weiterentwicklung von Kraftfahrzeugen bilden seit vielen Jahren Fahrerassistenzsysteme. Fahrerassistenzsysteme sind in aller Regel elektronische oder elektronisch gesteuerte Zusatzeinrichtungen im (Kraft)Fahrzeug zur Unterstützung des Fahrers bzw. Nutzers in bestimmten Fahrsituationen. Fahrerassistenzsystemen können dazu dienen, den Betrieb eines Kraftfahrzeugs komfortabler und/oder sicherer zu gestalten.

Beispiele von Fahrerassistenzsystemen sind das Antiblockiersystem (ABS), die Fahrdynamikregelung (ESP), der adaptiven Fernlichtassistent, der Regensensor, der Notbremsassistent, der Abstandsregelassistent (ACC), der Spurwechselassistent, der Spurerkennungs- bzw. -halteassistent sowie die Verkehrszeichenerkennung.

Ein weiteres Beispiel für Fahrerassistenzsysteme sind Einparkhilfen bzw. Einparkassistenzsysteme, die das Einparken des Kraftfahrzeugs in eine Parklücke für einen Fahrer erleichtern oder für diesen zur Gänze automatisiert durchführen.

Einparkassistenzsysteme verfügen üblicherweise über einen oder mehrere Sensoren, mit denen eine Umgebung des Fahrzeugs nach Hindernissen und/oder Freiräumen abgesucht wird. Ist eine Parklücke erkannt, so liefert das Einparkassistenzsystem entweder Hinweise zum korrekten Einparken des Fahrzeugs an den Fahrer oder führt - bei aktiven Parklenkassistenzsystemen - alle hierfür erforderlichen Vorgänge autark durch, wobei es die hierfür notwendigen Fahrzeugsysteme selbständig steuert.

So beschreibt beispielsweise die DE 10 2005 009 703 A1 eine Parkhilfsvorrichtung für ein Fahrzeug mit einer Erfassungseinheit zur Erfassung einer zurückgelegten Wegstrecke, mit einem Speicher zum Speichern der zurückgelegten Wegstrecke und mit einer Ansteuereinheit für eine Fahrzeuglenkung, wobei das Fahrzeug von der Ansteuereinheit entlang der gespeicherten Wegstrecke ausgehend von einem Endpunkt der gespeicherten Wegstrecke automatisch zurückgeführt wird.

Aus der DE 10 2008 002 598 A1 ist eine Vorrichtung zur semiautonomen Unterstützung der Lenkbewegung eines Fahrzeugs, mit Unterstützungsmittel zur Bereitstellung von Informationen über Lenkstellungen einer Fahrzeuglenkung und über eine zurückgelegte Strecke bei einer Fahrzeugfahrt bekannt, wobei eine durch eine Lernfahrt eingelernte Soll-Bahn für eine festgelegte Umgebung in einer Rechnereinheit ablegbar ist und die Unterstützungsmittel dazu ausgelegt sind, auf die Soll-Bahn bei Erreichen einer vorgegebenen Position des Fahrzeuges in der festgelegten Umgebung zurückzugreifen und den Fahrer beim Führen des Fahrzeugs entlang der Soll-Bahn zu unterstützen.

Die DE 10 2008 033 925 A1 beschreibt einen Garagenassistent zur Einparkunterstützung eines Fahrzeugs in eine Garage oder eine Parklücke mit einer Umfeldsensorik zur automatischen Erfassung von Raumverhältnissen und einer Fernsteuerung zum Aktivieren eines Einparkvorgangs, wobei der Einparkvorgang über eine drahtlose Schnittstelle visuell auf ein mobiles Endgerät übertragbar ist.

Und die DE 10 2010 023 162 A1 schlägt ein Verfahren zum Unterstützen eines Fahrers eines Kraftfahrzeugs beim Einparken in eine Parklücke, insbesondere in eine Garage, mithilfe einer Fahrerassistenzeinrichtung des Kraftfahrzeugs vor, wobei (a) in einem Lernmodus der Fahrerassistenzeinrichtung Referenzdaten über einen Umgebungsbereich der Parklücke mithilfe einer Sensoreinrichtung der Fahrerassistenzeinrichtung erfasst und abgespeichert werden, während das Kraftfahrzeug durch den Fahrer gesteuert in die Parklücke eingeparkt wird, (b) eine Referenzzielposition, welche im Lernmodus durch das Kraftfahrzeug erreicht wird, durch die Fahrerassistenzeinrichtung erfasst wird und Daten mit Informationen über diese Referenzzielposition abgespeichert werden, (c) in einem nachfolgenden von dem Lernmodus unterschiedlichen Betriebsmodus der Fahrerassistenzeinrichtung Sensordaten durch die Sensoreinrichtung erfasst und mit den Referenzdaten verglichen werden, wobei abhängig von diesem Vergleich der Umgebungsbereich der Parklücke anhand der erfassten Sensordaten erkannt und hierdurch eine aktuelle Position des Kraftfahrzeugs relativ zur Referenzzielposition bestimmt wird und (d) abhängig von der aktuellen Position des Kraftfahrzeugs relativ zur Referenzzielposition eine Parkbahn durch die Fahrerassistenzeinrichtung festgelegt wird, entlang welcher das Kraftfahrzeug aus der aktuellen Position heraus in die Parklücke eingeparkt wird.

Der nächstliegende Stand der Technik ist in der DE 10331948 U1 zu sehen.

Nach dem aktuellen Stand der Technik ist es somit bereits möglich, ein Fahrzeug mit Hilfe eines Einparkassistenten in eine Parklücke steuern zu lassen. Hierzu ist grundsätzlich ein Fahrer erforderlich, der den Vorgang überwacht, aktiv auslöst und kontinuierlich begleitet (z.B. durch aktive Schlüsselbetätigung, Gas- und Bremsenansteuerung, etc.). Ein Ziel der Entwicklung sind pilotierte bzw. autonome Parksysteme, bei denen kein Mensch mehr in den eigentlichen Parkvorgang involviert ist. Eine Zielrichtung innerhalb dieser Entwicklung ist autonomes Garagenparken, bei dem der Fahrer sein Fahrzeug in einem zu definierenden Bereich und mit einer bestimmten Pose abstellt, aussteigt, die Einparkfunktion auslöst und sich vom Fahrzeug entfernen kann.

Die vorliegende Erfindung dient dazu, das Problem einer Freigabe für ein autonomes oder pilotiertes Garagenparken zu lösen, das sich aufgrund der Vielfalt an möglichen Garagen- bzw. Ziel-Aufstandsflächen ergibt.

Dieses Problem wird gelöst durch das Fahrerassistenzsystem gemäß Anspruch 1 und das Verfahren gemäß Anspruch 9.

Erfindungsgemäß wird ein Fahrerassistenzsystem zum Freigeben eines autonomen oder pilotierten Ein- und Ausparkvorgangs bezüglich einer Ziel-Aufstandsfläche mittels eines Fahrzeugs, das über Steuer-, Regel- und Sensoreinrichtungen für einen autonomen oder pilotierten Ein- und Ausparkvorgang verfügt, vorgeschlagen. Das Fahrerassistenzsystem ist **dadurch** gekennzeichnet, dass es dazu eingerichtet ist,
(a) während wenigstens einer Fahrt des Fahrzeugs durch einen Nutzer von einer ersten Position im Nahbereich von und außerhalb einer Ziel-Aufstandsfläche zu einer zweiten Position innerhalb einer Ziel-Aufstandsfläche und von der zweiten Position zurück zu einer ersten Position im Nahbereich von und außerhalb der Ziel-Aufstandsfläche mittels fahrzeugeigener Sensorik Messwerte zu erfassen;
(b) von einer Auswertungseinrichtung auf Grundlage der erfassten Messwerte, der Eigenschaften des Fahrzeugs und der Fähigkeiten der fahrzeugeigenen Einrichtungen für ein autonomes oder pilotiertes Ein- und Ausparken ermitteln zu lassen, ob das Fahrzeug autonom oder pilotiert in die Ziel-Aufstandsfläche ein- und von der Ziel-Aufstandsfläche wieder auszuparken vermag; und
(c) im Falle eines positiven Ergebnisses in Schritt (b) einen Freigabedatensatz für ein autonomes oder pilotiertes Ein- und Ausparken bezüglich der Ziel-Aufstandsfläche in einer Speichereinrichtung zu speichern.

In der Realität herrscht eine große Vielfalt an möglichen Garagentypen, Garagenzufahrten, Garagen-Aufstandsflächen, Car-Ports, etc., allgemeiner ausgedrückt an Ziel-Aufstandflächen für ein Fahrzeug, deren Umgebung und Zufahrtsmöglichkeiten. So kann beispielsweise die Zufahrt stark vertikal bzw. horizontal gekrümmt oder übermäßig tordiert (einseitig erhöht) sein. Auch muss die Zufahrt zu einer Ziel-Aufstandsfläche (z.B. ein Garagentor, die Begrenzungen eines Car-Ports) als solches korrekt erkannt werden. Diese Vielfalt kann durch Tests beim Hersteller nicht abgesichert werden. Vielmehr muss die autonome oder pilotierte Einparkassistenz für jede Ziel-Aufstandsfläche individuell freigeschaltet werden. Mittels des erfindungsgemäßen Fahrerassistenzsystems ist eine solche individuelle Freischaltung auf einfache und vorteilhafte Weise zu realisieren.

Gemäß einer ersten vorteilhaften Weiterbildung der Erfindung ist das Fahrerassistenzsystem dazu eingerichtet, im Schritt
(a) während mehrerer Fahrten des Fahrzeugs durch einen Nutzer von einer ersten Position im Nahbereich von und außerhalb einer Ziel-Aufstandsfläche zu einer zweiten Position innerhalb einer Ziel-Aufstandsfläche und von der zweiten Position zu einer ersten Position im Nahbereich von und außerhalb der Ziel-Aufstandsfläche mittels fahrzeugeigener Sensorik Messwerte zu erfassen; und in Schritt
(b) von der Auswertungseinrichtung auf Grundlage der bei den mehreren Fahrten erfassten Messwerte, der Eigenschaften des Fahrzeugs und der Fähigkeiten der fahrzeugeigenen Einrichtungen für ein autonomes oder pilotiertes Ein- und Ausparken ermitteln zu lassen, ob das Fahrzeug pilotiert in die Ziel-Aufstandsfläche ein- und von der Ziel-Aufstandsfläche wieder auszuparken vermag.

Bei mehreren Ein- und Ausparkvorgängen werden verschiedene erste und verschiedene zweite Positionen des Fahrzeugs vorkommen. Daher stehen der Auswertungsvorrichtung nach mehreren Ein- und Ausparkvorgängen eine größere Anzahl an unterschiedlichen Messwerten zur Verfügung, durch die in vorteilhafter Weise eine genauere Ermittlung, ob für eine spezifische Ziel-Aufstandsfläche eine Freigabe für ein autonomes oder pilotiertes Ein- und Ausparken erteilt werden kann, ermöglicht wird.

Gemäß einer zweiten vorteilhaften Weiterbildung der Erfindung ist das Fahrerassistenzsystem dazu eingerichtet, als Messwerte
(a1) wenigstens einen Verlauf des Nick-, Gier- und/oder Wankwinkels gegenüber der Ziel-Aufstandsfläche;
(a2) wenigstens einen Verlauf der Lenkwinkel und/oder des Lenkmoments,
(a3) wenigstens eine Trajektorie;
(a4) Daten, die wenigstens einen Reibungskoeffizienten und/oder eine Sichtbedingung beinhalten oder darauf beruhen; und/oder
(a5) Rohdaten und/oder weiterverarbeitete Daten von Umfeldsensorik-Einrichtungen
zu erfassen.

Gemäß noch einer weiteren vorteilhaften Weiterbildung der Erfindung ist das Fahrerassistenzsystem dazu eingerichtet, in dem Freigabedatensatz zur Wiedererkennung der Ziel-Aufstandsfläche Daten über das Aussehen, Klassifikationsergebnis(se) und/oder die Lage der Ziel-Aufstandsfläche zu speichern.

Ebenso ist es von Vorteil, wenn das Fahrerassistenzsystem dazu eingerichtet ist,
(d) ein fahrzeugexternes Erkennungsmittel, und/oder
(e) ein Car2Infrastruktur-System
zur Wiedererkennung der Ziel-Aufstandsfläche verwenden zu können.

Ist eine erfindungsgemäße Freigabe einer Ziel-Aufstandsfläche erfolgt, so ist es von Vorteil, wenn das Fahrerassistenzsystem dazu eingerichtet ist, mittels fahrzeugeigenen und/oder fahrzeugfremden Einrichtungen dem Nutzer einmalig oder wiederholt dabei zu assistieren, eine geeignete Pose des Fahrzeugs für eine Durchführung eines autonomen oder pilotierten Einparkvorgangs zu erreichen.

Hierzu kann das das Fahrerassistenzsystem erfindungsgemäß dazu eingerichtet sein, das Assistieren auf Grundlage von für einen Menschen wahrnehmbaren optischen und/oder akustischen Signalen durchzuführen.

In vorteilhafter Weise kann das Fahrerassistenzsystem dazu eingerichtet sein, dem Nutzer dahin zu assistieren, dass
(f) er eine Unterstützung zur Anbringung von wenigstens einer Markierung auf einem Boden, einer Wand und/oder Decke für eine geeignete Pose des Fahrzeugs erhält,
(g) ihm mittels einer Anzeigeeinrichtung angezeigt wird, in welchem Bereich im Nahbereich außerhalb der Ziel-Aufstandsfläche das Fahrzeug für eine geeignete Pose hineinbewegt werden muss, und/oder
(h) ihm zusätzlich Informationen über die Pose signalisiert werden.

Die vorliegende Erfindung umfasst auch ein Verfahren zum Freigeben eines autonomen oder pilotierten Ein- und Ausparkvorgangs bezüglich einer Ziel-Aufstandsfläche mittels eines Fahrzeugs, das über Steuer-, Regel- und Sensoreinrichtungen für einen autonomen oder pilotierten Ein- und Ausparkvorgang verfügt. Das Verfahren ist dadurch gekennzeichnet, dass
(a) von einem Nutzer ein Fahrzeug wenigstens einmal von einer ersten Position im Nahbereich von und außerhalb einer Ziel-Aufstandsfläche zu einer zweiten Position innerhalb einer Ziel-Aufstandsfläche und von der zweiten Position zu einer ersten Position im Nahbereich von und außerhalb der Ziel-Aufstandsfläche gefahren wird;
(b) während der Fahrt mittels fahrzeugeigener Sensorik Messwerte erfasst werden;
(c) von einer Auswertungseinrichtung auf Grundlage der erfassten Messwerte, der Eigenschaften des Fahrzeugs und der Fähigkeiten von fahrzeugeigenen Einrichtungen für ein autonomes oder pilotiertes Ein- und Ausparken ermittelt wird, ob das Fahrzeug autonom oder pilotiert in die Ziel-Aufstandsfläche ein- und von der Ziel-Aufstandsfläche wieder auszuparken vermag; und
(d) im Falle eines positiven Ergebnisses in Schritt (c) ein Freigabedatensatz für ein autonomes oder pilotiertes Ein- und Ausparken bezüglich der Ziel-Aufstandsfläche in einer Speichereinrichtung gespeichert wird.

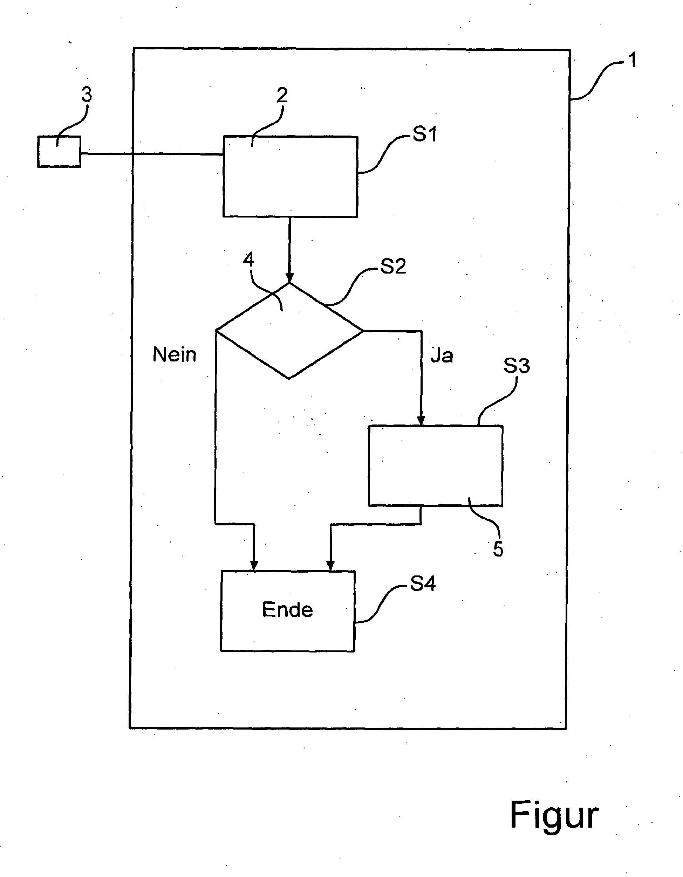

Die vorliegende Erfindung wird anhand der beigefügten Zeichnung näher erläutert.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Die Figur zeigt eine schematische Darstellung des Fahrerassistenzsystems sowie einen beispielhaften Ablauf des Verfahrens, wie es durch das erfindungsgemäße Fahrerassistenzsystem durchgeführt wird. Die Darstellungen in der Figur sind rein schematisch.

Während des beispielhaften Verfahrens wird in einem Schritt S1 während wenigstens einer Fahrt des Fahrzeugs durch einen Nutzer von einer ersten Position im Nahbereich von und außerhalb einer Ziel-Aufstandsfläche zu einer zweiten Position innerhalb einer Ziel-Aufstandsfläche und von der zweiten Position zurück zu einer ersten Position im Nahbereich von und außerhalb der Ziel-Aufstandsfläche mittels fahrzeugeigener Sensorik 3 Messwerte durch eine Messwert-Erfassungseinrichtung 2 erfasst, in einem Schritt S2 von einer - im vorliegenden Beispiel fahrzeugeigenen - Auswertungseinrichtung 4 auf Grundlage der erfassten Messwerte, der Eigenschaften des Fahrzeugs und der Fähigkeiten der fahrzeugeigenen Einrichtungen für ein autonomes oder pilotiertes Ein- und Ausparken ermitteln, ob das Fahrzeug autonom oder pilotiert in die Ziel-Aufstandsfläche ein- und von der Ziel-Aufstandsfläche wieder auszuparken vermag. Ist das Ergebnis in Schritt S2 positiv (Ja), so wird in einem Schritt S3 ein Freigabedatensatz für ein autonomes oder pilotiertes Ein- und Ausparken bezüglich der Ziel-Aufstandsfläche in einer - im vorliegenden Beispiel ebenfalls fahrzeugeigenen - Speichereinrichtung 5 gespeichert und das Verfahren beendet (Schritt S4). Ist das Ergebnis in Schritt S2 negativ (Nein) so wird das Verfahren ohne das Abspeichern eines Freigabedatensatzes beendet (Schritt S4).

Mit dem Begriff "im Nahbereich" ist der Bereich gemeint, von dem aus ein Fahrer eines Fahrzeugs üblicherweise einen Einparkvorgang in eine Ziel-Aufstandsfläche beginnt. Dies ist beispielsweise bei einer durch ein Garagentor verschließbaren Garage ein Abstand des nächstkommenden Fahrzeugteils vom Garagentor, der gerade noch das Öffnen des Garagentores ermöglicht (beispielsweise ein Abstand von nur 1 cm des nächstkommenden Fahrzeugteils ab dem Garagentor) bis hin zu einem Abstand des nächstkommenden Fahrzeugteils von bis zu etwa 8, 9 oder 10 Metern vom Garagentor. In ähnlicher Weise wird ein Fahrer zum Beispiel bei einer Aufstandsfläche in einer Tiefgarage, nachdem er das Garagentor der Tiefgarage passiert hat, einen Einparkvorgang in einem Abstand des nächstkommenden Fahrzeugteils von bis zu etwa 8, 9 oder 10 Metern bis zur nächstliegenden Markierung, mit der die Tiefgaragen-Aufstandsfläche markiert ist, beginnen. Erfindungsgemäß kann der Nahbereich selbstverständlich alle geeigneten Entfernungen umfassen, wie beispielsweise 7 Meter, 6 Meter, 5 Meter, 4 Meter, 3 Meter, 2 Meter, 1 Meter, 50 Zentimeter, 20 Zentimeter, 10 Zentimeter, etc.

Die Weglänge, die von einer ersten Position im Nahbereich von und außerhalb einer Ziel-Aufstandsfläche zu einer zweiten Position innerhalb einer Ziel-Aufstandsfläche zurückgelegt wird, ist grundsätzlich nicht beschränkt. So kann dieser Weg beispielsweise bei einer größeren Garage oder einem größeren Car-Port, die/der eine Anzahl an Ziel-Aufstandsflächen aufweist, mehrere zig Meter, und/oder bei einer Garage, die sich über mehrere Ebenen erstreckt, auch mehrere Hundert Meter lang sein. Im Bereich von kleinen (z.B. privaten) Garagen oder Car-Ports mit nur wenigen oder auch nur einer Ziel-Aufstandsfläche, kann dieser Weg auch nur einige wenige Meter betragen.

Mit dem Begriff "innerhalb einer Ziel-Aufstandsfläche" ist der Bereich gemeint, den üblicherweise als Stellplatz für ein Fahrzeug definiert ist. Dies ist beispielsweise innerhalb einer größeren Garage mit mehreren Ziel-Aufstandsflächen der Bereich, der für je ein Fahrzeug durch entsprechende Markierungen an Boden und/oder Wand entsprechend markiert ist. Auch kann eine Ziel-Aufstandsfläche durch bauliche Gegebenheiten definiert sein, beispielsweise durch eine Vorder-Wand und zwei Seiten-Wände, durch eine Vorder-Wand und zwei seitliche Stützpfeiler, durch die Dimensionen eines Duplex-Stellplatzes, Car-Port-Stellplatzes, etc.

Mit dem Begriff "autonomes Ein- und Ausparken" ist ein Ein- und Ausparkvorgang gemeint, bei dem nach einem Starten des Vorgangs durch einen Nutzer der weitere Vorgang bis zum Abschluss eines Ein- oder Ausparkvorgangs vollständig automatisch abläuft. Hierbei kann auch ein automatisches Unter- oder Abbrechen des Vorgangs erfolgen.

Mit dem Begriff "pilotiertes Ein- und Ausparken" ist ein Ein- und Ausparkvorgang gemeint, bei dem nach einem Starten des Vorgangs durch einen Nutzer der weitere Vorgang bis zum Abschluss eines Ein- oder Ausparkvorgangs zwar ebenfalls automatisch ablaufen kann, der Nutzer aber während des Vorgangs entweder ständig eine bestimmte Bedienhandlung (z.B. gedrückt Halten einer Bedientaste) vornehmen muss und/oder der Nutzer durch eine Bedienhandlung den Vorgang jederzeit unter- oder abbrechen kann.

Von dem erfindungsgemäßen Fahrerassistenzsystem werden während der wenigstens einen Fahrt Daten (Messwerte) von einer fahrzeugeigener Sensorik erfasst. Hierbei kann es sich um alle geeigneten Messwerte handeln, beispielsweise um solche, die fahrzeuginterne Vorgänge betreffen (z.B. Lenkwinkel) und/oder um solche, die das Umfeld des Fahrzeugs betreffen (z.B. Abstand von Fahrzeugaußenkanten zu Hindernissen).

Einem Fachmann ist bekannt oder er kann durch einige wenige Versuche herausfinden, welcher Messwert oder Kombination von Messwerten sinnvoll oder erforderlich ist, um bei einem gegebenen Fahrzeug mit vorgegebenen fahrzeugseitigen Einrichtungen für ein autonomes oder pilotiertes Ein- und Ausparken ermitteln zu können, ob für eine gegebene Ziel-Aufstandsfläche mit ausreichender Sicherheit eine Freigabe für ein autonomes oder pilotiertes Ein- und Ausparken des Fahrzeugs erteilt werden kann oder nicht. Daher kann das Fahrerassistenzsystem je nach Fahrzeugtyp und in Abhängigkeit von den Fähigkeiten der fahrzeugseitigen Einrichtungen für ein autonomes oder pilotiertes Ein- und Ausparken auch zur Erfassung von unterschiedlichen Messwerten und/oder Kombinationen an Messwerten ausgelegt sein.

Beispielsweise kann das Fahrerassistenzsystem bei der wenigstens einen Fahrt als Messwerte wenigstens einen Verlauf des Nick-, Gier- und/oder Wankwinkels gegenüber der Ziel-Aufstandsfläche, wenigstens einen Verlauf der Lenkwinkel und/oder des Lenkmoments, wenigstens eine Trajektorie, Daten, die wenigstens einen Reibungskoeffizienten und/oder eine Sichtbedingung beinhalten oder darauf beruhen, und/oder Rohdaten und/oder weiterverarbeitete Daten von Umfeldsensorik-Einrichtungen erfassen.

Je nach Ziel-Aufstandsfläche (Länge, Breite, Höhe, Größe der Zufahrt, etc.), Fahrzeug-Eigenschaft (Länge, Breite, Höhe, Kurvenradius, etc.) und Eigenschaften der fahrzeugseitigen Einrichtungen für ein autonomes oder pilotiertes Ein- und Ausparken kann es ausreichend sein, wenn nur Messwerte bezüglich eines einzigen Kriteriums erfasst werden.

Wenn beispielsweise die Dimensionen der Ziel-Aufstandsfläche und die Lage der Zufahrtöffnung zu der Ziel-Aufstandsfläche in Bezug auf das darin autonom oder pilotiert zu parkende Fahrzeug unzweifelhaft ausreichend sind und die fahrzeugeigenen Einrichtungen für ein autonomes oder pilotiertes Ein- und Ausparken für die gegebene Ziel-Aufstandsfläche über ausreichende Fähigkeiten verfügen, kann die Erfassung eines einzigen Kriteriums dafür ausreichend sein, ob ein autonomes oder pilotiertes Ein- und Ausparken für diese Ziel-Aufstandsfläche für dieses Fahrzeug freigegeben werden kann oder nicht,

Falls in dem oben geschilderten Fall beispielsweise die Zufahrt zu der Ziel-Aufstandsfläche abschüssig wäre, könnte durch Messwerte, die auf einen nicht ausreichend hohen Reibungskoeffizienten zwischen Boden und Reifen schließen lassen oder einen solchen ausweisen, ermittelt werden, dass für diese Ziel-Aufstandsfläche ein autonomes oder pilotiertes Ein- und Ausparken nicht freigegeben werden kann, da dies mit einem zu großen Sicherheitsrisiko verbunden wäre. Es bedürfte in einem solchen Fall also keines weiteren Kriteriums für die Entscheidung.

In ähnlicher Weise könnte in dem oben geschilderten Fall eine Verdeckung, beispielsweise in Form einer Säule gegeben sein, um die ein Nutzer mit seinem Fahrzeug herumfahren muss, um in die Ziel-Aufstandsfläche einparken zu können. Auch in einem solchen Fall könnten die Eigenschaften der fahrzeugeigenen Einrichtungen für ein autonomes oder pilotierte Ein- und Ausparken gegebenenfalls nicht ausreichen. In diesem Fall könnte also allein auf Grundlage von Daten, die die Sichtbedingungen ermitteln, entschieden werden, ob ein autonomes oder pilotiertes Ein- und Ausparken freigegeben werden kann oder nicht.

Selbstverständlich ist es erfindungsgemäß vorgesehen und möglich, dass Messwerte von mehreren Kriterien erfasst, gegebenenfalls kombiniert und ausgewertet werden.

In Abhängigkeit von der gegebenen Ziel-Aufstandsfläche, den Eigenschaften des Fahrzeugs (z.B. Länge, Breite, Höhe, Wendekreis) und den Eigenschaften der Einrichtungen des Fahrzeugs für ein autonomes oder pilotiertes Ein- und Ausparken kann es sinnvoll oder notwendig sein, dass mehrere Fahrten des Fahrzeugs durch einen Nutzer von einer ersten Position im Nahbereich von und außerhalb einer Ziel-Aufstandsfläche zu einer zweiten Position innerhalb einer Ziel-Aufstandsfläche und von der zweiten Position zu einer ersten Position im Nahbereich von und außerhalb der Aufstandsfläche durchgeführt und dabei mittels fahrzeugeigener Sensorik Messwerte erfasst werden. Von der Auswertungseinrichtung kann dann auf Grundlage der bei den mehreren Fahrten erfassten, in der Regel voneinander zumindest leicht abweichenden Messwerten mit noch größerer Sicherheit ermittelt werden, ob das Fahrzeug autonom oder pilotiert in die Ziel-Aufstandsfläche ein- und von der Ziel-Aufstandsfläche wieder auszuparken vermag.

Bei der Auswertungseinrichtung kann es sich in allen Fällen entweder um eine fahrzeugseitige Auswertungseinrichtung, beispielsweise in Form einer digitalen Recheneinrichtung handeln, wie sie heute bereits in vielen Fahrzeugen vorhanden ist. Diese Recheneinrichtung kann beispielsweise Bestandteil der Head-Unit oder des Steuergeräts sein, das für einen autonomen oder pilotierten Ein- und Ausparkvorgang verwendet wird. Die Auswertungseinrichtung kann aber auch eine fahrzeugexterne Einrichtung sein. Hierzu können die erfassten Daten z.B. mittels einer drahtgebundenen oder drahtlosen Verbindung zu einer hierfür geeigneten Auswertungseinrichtung übertragen werden. Auf der externen Auswertungseinrichtung wird dann die Auswertung vorgenommen und das Ergebnis der Auswertung zu dem Fahrzeug zurück übertragen. Ein solcher Weg kann beispielsweise sinnvoll sein, wenn die Rechenleistung einer fahrzeugseitig vorhandenen Recheneinrichtung nicht ausreichend ist, oder das Ergebnis der Fahrt(en) bezüglich einer gegebenen Ziel-Aufstandsfläche beispielsweise für eine spätere nochmalige Verwendung extern gespeichert werden soll.

Als Eigenschaften der fahrzeugseitigen Einrichtungen, die für ein autonomes oder pilotiertes Ein- und Ausparken vorgesehen sind, können beispielsweise die Anzahl, die Erfassungswinkel, die Genauigkeit (beispielsweise wie genau können die Dimensionen einer Einfahrt oder einer Ziel-Aufstandsfläche erfasst werden), etc. von fahrzeugeigenen Sensoriken für das Umfeld des Fahrzeugs berücksichtigt werden. Oder auch die Genauigkeit und Schnelligkeit, mit der bei einem autonomen oder pilotierten Ein- oder Ausparkvorgang die hierfür erforderlichen Steuergeräte und Aktorik (z.B. für die Motor-, Lenkungs- und Bremsenansteuerung) agieren bzw. reagieren können.

Als Eigenschaften des Fahrzeugs kann - neben den oben bereits erwähnten Eigenschaften der Länge, Breite, Höhe und des Wendekreises - beispielsweise auch berücksichtigt werden, bis zu welchem Nick-, Gier- und/oder Wankwinkel gegenüber der Ziel-Aufstandsfläche das Fahrzeug noch sicher bewegt werden kann. Oder auch, ob es sich bei dem Fahrzeug um ein Zweirad- oder ein Vierrad-angetriebenes Fahrzeug handelt, welche Bodenfreiheit das Fahrzeug hat, etc.

Wie aus der obigen, nicht abschließenden Aufzählung ersichtlich ist, gibt es sowohl für den jeweiligen Fahrzeugtyp als auch für die in ihm vorgesehenen Einrichtungen für ein autonomes oder pilotiertes Ein- und Ausparken für eine Ziel-Aufstandsfläche eine große Anzahl an verschiedenen Variationen. Die zu berücksichtigenden Kriterien können daher für jeden Fahrzeugtyp und die jeweils darin vorgesehenen Einrichtungen für ein autonomes oder pilotiertes Ein- und Ausparken für eine Ziel-Aufstandsfläche unterschiedlich sein.

Wurde durch das Fahrerassistenzsystem festgestellt, dass für das Fahrzeug auf Grundlage seiner Eigenschaften und der Eigenschaften der für ein autonomes oder pilotiertes Ein- und Ausparken vorhandenen Einrichtungen für eine gegebenen Ziel-Aufstandsfläche ein sicheres autonomes oder pilotiertes Ein- und Ausparken möglich ist, wird erfindungsgemäß ein Freigabedatensatz in einer Speichereinrichtung gespeichert. Als eine solche Speichereinrichtung kann beispielsweise jede geeignete Einrichtung mit einem nichtflüchtigen digitalen Speicher dienen. Diese Speichereinrichtung wird in bevorzugter Weise eine fahrzeugeigene sein (beispielsweise eine, die in dem Steuergerät vorhanden ist, das autonome oder pilotierte Ein- und Ausparkvorgänge steuert), dies ist jedoch nicht zwingend erforderlich. Es kann auch eine fahrzeugexterne Speichereinrichtung vorgesehen sein, mit der von dem Fahrzeug aus eine Datenkommunikation zum Übertragen und Abruf eines Freigabedatensatzes für eine gegebene Ziel-Aufstandsfläche möglich ist.

Eine solche fahrzeugexterne Speichereinrichtung bietet den Vorteil, dass Freigabedatensätze, die von verschiedenen Fahrzeugen verschiedener Fahrzeugtypen für verschiedene Ziel-Aufstandsflächen erzeugt wurden, darin gespeichert werden können. Somit kann es für einen Nutzer eines bestimmten Fahrzeugtyps (gegebenenfalls mit einer vorgegebenen Ausstattung für ein autonomes oder pilotiertes Ein- und Ausparken) entbehrlich sein, bei einer gegebenen Ziel-Aufstandsfläche den oben geschilderten wenigstens einen Ein- und Ausparkvorgang selbst durchzuführen, sofern für die gegebene Ziel-Aufstandsfläche für den von dem Fahrer verwendeten Fahrzeugtyp bereits wenigstens ein Freigabedatensatz in der fahrzeugexternen Speichereinrichtung vorhanden und von dem Fahrzeug abrufbar ist.

Auch kann erfindungsgemäß vorgesehen sein, dass sowohl eine fahrzeugeigene als auch eine fahrzeugexterne Speichereinrichtung vorgesehen sind, wobei von der fahrzeugexternen Speichereinrichtung beispielsweise zusätzliche/neue Freigabedatensätze für interessierende Ziel-Aufstandsflächen in die fahrzeugeigene Speichereinrichtung heruntergeladen und gespeichert werden können bzw. bereits dort existierende Freigabedatensätze aktualisiert werden können (wenn sich beispielsweise bestimmte Charakteristika der Ziel-Aufstandsfläche oder des Fahrzeugs geändert haben).

Der Freigabedatensatz enthält die erforderlichen Daten, damit vor einem Start eines autonomen oder pilotierten Einparkvorgangs durch einen Nutzer sichergestellt ist, dass ein Fahrzeug tatsächlich in die freigegebene Ziel-Aufstandsfläche einparkt und nicht in eine davon verschiedene. Hierzu können in dem Freigabedatensatz zur Wiedererkennung der Ziel-Aufstandsfläche beispielsweise Daten über das Aussehen, Klassifikationsergebnis(se) und/oder die Lage der Ziel-Aufstandsfläche gespeichert werden.

Hierzu kann beispielsweise durch eine fahrzeugeigene Kameraeinrichtung eine oder mehrere Abbildungen der Ziel-Aufstandsfläche, der Zufahrt, der Einfahrt und/oder der näheren Umgebung der Ziel-Aufstandsfläche aufgenommen und in der Speichereinrichtung abgespeichert werden. Mittels der fahrzeugeigenen Kameraeinrichtung können dann bei Erreichen einer oder bei Annäherung an eine Ziel-Aufstandsfläche erneut eine oder mehrere Abbildungen aufgenommen werden und mit den gespeicherten Abbildungen verglichen werden. Hierfür kann beispielsweise ein Bildauswertungsprogramm mit geeigneten Bildauswertungsalgorithmen verwendet werden, wodurch auch Abbildungen einander zugeordnet werden können, die nicht aus exakt der gleichen Position heraus aufgenommen wurden. Alternativ oder ergänzend kann beispielsweise ein Klassifikationsergebnis bezüglich einer Garagen- oder Car-Port-Einfahrt zur Wiedererkennung herangezogen werden. Ebenfalls alternativ oder ergänzend können beispielsweise die Orts-Koordinaten einer Ziel-Aufstandsfläche oder einer Zufahrt/Einfahrt mittels einer Satelliten-gestützten Positionsbestimmungseinrichtung erfasst und mit einer abgespeicherten Position verglichen werden. In naher Zukunft wird es möglich sein, die Lage einer Ziel-Aufstandsfläche mittels Satelliten-gestützter Positionsbestimmung (einen ausreichenden Empfang von Satelliten-Signalen vorausgesetzt) bis auf wenige Zentimeter genau bestimmten zu können.

Weiter ist es von Vorteil, wenn das Fahrerassistenzsystem dazu eingerichtet ist, ein fahrzeugexternes Erkennungsmittel, und/oder ein Car2Infrastruktur-System zur Wiedererkennung der Ziel-Aufstandsfläche verwenden zu können.

Erfindungsgemäß ermittelt die Steuereinrichtung beispielsweise auf Grundlage aktuell erfasster Umgebungsdaten im Abgleich mit im Freigabedatensatz gespeicherten Informationen, ob sich das Fahrzeug im Nahbereich einer bereits einmal freigegebenen Ziel-Aufstandsfläche befindet. Alternativ oder ergänzend hierzu kann ein Nutzer aus gespeicherten Freigabedatensätzen die Ziel-Aufstandsfläche auswählen, in dessen Nahbereich er sich wähnt.

Vor der eigentlichen Durchführung eines autonomen oder pilotierten Einparkvorgangs, kann durch Abgleich mit wenigstens einem fahrzeugexternen Erkennungsmittel und/oder der Verwendung eines Car2Infrastruktur-Systems verifiziert werden, ob sich das Fahrzeug tatsächlich im Nahbereich der Ziel-Aufstandsfläche befindet, die entweder durch die Steuereinrichtung ermittelt oder durch den Nutzer ausgewählt wurde.

Bei dem fahrzeugexternen Erkennungsmittel kann es sich beispielsweise um eine eineindeutiges, wiedererkennbares und nicht zerstörungsfrei entfernbares Erkennungsmittel handeln, wie beispielsweise eine Landmarke. Diese Landmarken können alle geeigneten Formen und Funktionen aufweisen. Als Beispiele von derartigen Landmarken seien Aufkleber (z.B. mit einem speziellen Bar-Code), NFC-Buttons, etc. erwähnt. Dieses fahrzeugexterne Erkennungsmittel ist bevorzugt im Nahbereich der Ziel-Aufstandsfläche auf dem Boden, einer Wand oder der Decke der Garage oder des Car-Ports angebracht und kann durch geeignete fahrzeugeigene Einrichtungen erkannt werden. Die Art und Weise der Erkennung ist dabei nicht beschränkt und es kann jede geeignete Art und Weise angewandt werden (z.B. optische Erkennung, Verwendung von GPS, WLAN, Verwendung von anderen kurzreichweitigen Funksystemen).

Bei Verwendung eines Car2Infrastruktur-Systems kann beispielsweise von einer Sende-/Empfangs-Einrichtung eines Fahrzeugs auf drahtlosem Weg ein kodiertes Signal zum Öffnen eines elektrisch betätigbaren Garagentores ausgesendet werden. Öffnet sich daraufhin das Garagentor (was durch den Empfang eines entsprechenden Signals von der Steuereinrichtung des Garagentores oder mittels fahrzeugseitiger Bilderfassung und -auswertung bestätigt werden kann), ist sichergestellt, dass das Fahrzeug sich im Bereich der angenommenen freigegebenen Ziel-Aufstandsfläche befindet. Als weitere Beispiele für ein Car2Infrastruktur-System seien erwähnt ein Garage2Car-, Car2Garage-, Haustechnik2Car-, Car2Haustechnik-, Garagentor2Car-System, etc.

Wurde eine Ziel-Aufstandsfläche einmal durch das Fahrerassistenzsystem freigegeben, ergibt sich für einen Fahrer für die Nutzung eines autonomen oder pilotierten Einparkvorgangs oftmals die Frage, wo und in welcher Pose er das Fahrzeug abstellen muss, damit der autonome oder pilotierte Einparkvorgang erfolgreich von dem im Fahrzeug für einen autonomen oder pilotierten Ein- und Ausparkvorgang vorhandenen Einrichtungen durchgeführt werden kann.

Daher ist es von Vorteil, wenn das Fahrerassistenzsystem auch dazu eingerichtet ist, mittels fahrzeugeigenen und/oder fahrzeugfremden Einrichtungen dem Nutzer einmalig oder wiederholt dabei zu assistieren, eine geeignete Pose des Fahrzeugs für eine Durchführung eines autonomen oder pilotierten Einparkvorgangs zu erreichen.

Ein solches Assistieren kann beispielsweise auf Grundlage von für einen Menschen wahrnehmbaren optischen und/oder akustischen Signalen vorgenommen werden.

Als Beispiele für ein solches Assistieren seien erwähnt:
- Das Fahrerassistenzsystem assistiert einem Nutzer dabei, wenigstens eine Markierung am Boden (z.B. Haltelinie) oder einer anderen Fläche (Wand, Decke, etc.) anzubringen, die ihm das Auffinden einer geeigneten Pose zumindest erleichtert. Der Fahrer kann sich für das Abstellen des Fahrzeugs dann an der angebrachten Markierung orientieren.

Hierfür kann durch das Fahrerassistenzsystem beispielsweise ein Anzeigen einer geeigneten Position der Markierung mittels einer entsprechenden Scheinwerfereinrichtung erfolgen; oder es kann eine entsprechende Anzeige auf einer Anzeigeeinrichtung dargestellt werden, beispielsweise in einem Bild der Rundumsicht; ein weiteres Beispiel wäre ein Assistieren unter Verwendung einer Ansage oder mit Hilfe einer Kommunikation mit einem mobilen Gerät (Mobiltelefon, Smartphone).

Ein solches Assistieren braucht im einfachsten Fall nur einmal pro freigegebener Ziel-Aufstandsfläche zu erfolgen, beispielsweise wenn der Nutzer erfolgreich wenigstens eine Markierung angebracht hat. Geht diese Markierung verloren oder wird unbrauchbar, kann vorgesehen sein, dass der Nutzer dieses Assistieren durch das Fahrerassistenzsystem erneut aktivieren kann.
- Das Fahrerassistenzsystem assistiert einem Nutzer dabei, bei Annäherung an einen Nahbereich einer freigegebenen Ziel-Aufstandsfläche, einen geeigneten Bereich anzufahren, von dem aus ein autonomes oder pilotiertes Einparken erfolgen kann.

Hierfür kann durch das Fahrerassistenzsystem beispielsweise eine Anzeige in einem Bild der Rundumsicht angezeigt werden, oder es kann durch das Fahrerassistenzsystem durch eine Scheinwerfereinrichtung dieser Bereich ausgeleuchtet werden. Hierbei kann es sich um eine fahrzeugeigene Scheinwerfereinrichtung handeln aber auch um eine fahrzeugfremde Scheinwerfereinrichtung, die mit dem Fahrerassistenzsystem kommunizieren kann.
- Das Fahrerassistenzsystem gibt dem Nutzer zusätzlich Informationen über die Pose (beispielsweise die Entfernung bis zu einer geeigneten Pose, einen Vorschlag für eine geeignete Trajektorie zur Erreichung einer geeigneten Pose, etc.). Diese Informationen können einem Nutzer auf allen möglichen Arten und Weisen zur Verfügung gestellt werden, beispielsweise mit Hilfe einer Anzeigeinrichtung und/oder einer akustisch wahrnehmbaren Ansage.

Die verschiedenen Vorgänge des Assistierens können selbstverständlich in jeder denkbaren Weise miteinander kombiniert werden.

Das erfindungsgemäße Verfahren umfasst selbstverständlich auch sämtliche Ausführungsformen und Variationen, wie sie sich für einen Fachmann aus der Schilderung des erfindungsgemäßen Fahrerassistenzsystems und seiner vorteilhaften Weiterbildungen ohne Weiteres ergeben.

## Patentansprüche

1. Fahrerassistenzsystem (1) zum Freigeben eines autonomen oder pilotierten Ein- und Ausparkvorgangs bezüglich einer Ziel-Aufstandsfläche mittels eines Fahrzeugs, das über Steuer-, Regel- und Sensoreinrichtungen für einen autonomen oder pilotierten Ein- und Ausparkvorgang verfügt,
wobei
das Fahrerassistenzsystem dazu eingerichtet ist,
(a) während wenigstens einer Fahrt des Fahrzeugs durch einen Nutzer von einer ersten Position im Nahbereich von und außerhalb einer Ziel-Aufstandsfläche zu einer zweiten Position innerhalb einer Ziel-Aufstandsfläche und von der zweiten Position zurück zu einer ersten Position im Nahbereich von und außerhalb der Ziel-Aufstandsfläche mittels fahrzeugeigener Sensorik (3) Messwerte zu erfassen (S1);
und weiter **dadurch gekennzeichnet ist, dass**
(b) von einer Auswertungseinrichtung (4) auf Grundlage der erfassten Messwerte, der Eigenschaften des Fahrzeugs und der Fähigkeiten der fahrzeugeigenen Einrichtungen für ein autonomes oder pilotiertes Ein- und Ausparken ermitteln zu lassen, ob das Fahrzeug autonom oder pilotiert in die Ziel-Aufstandsfläche ein- und von der Ziel-Aufstandsfläche wieder auszuparken vermag (S2); und
(c) im Falle eines positiven Ergebnisses in Schritt (b) einen Freigabedatensatz für ein autonomes oder pilotiertes Ein- und Ausparken bezüglich der Ziel-Aufstandsfläche in einer Speichereinrichtung (5) zu speichern (S3).

2. Fahrerassistenzsystem (1) gemäß Anspruch 1
**dadurch gekennzeichnet, dass**
das Fahrerassistenzsystem (1) dazu eingerichtet ist, im Schritt
(a) während mehrerer Fahrten des Fahrzeugs durch einen Nutzer von einer ersten Position im Nahbereich von und außerhalb einer Ziel-Aufstandsfläche zu einer zweiten Position innerhalb einer Ziel-Aufstandsfläche und von der zweiten Position zu einer ersten Position im Nahbereich von und außerhalb der Ziel-Aufstandsfläche mittels fahrzeugeigener Sensorik (3) Messwerte zu erfassen (S1); und in Schritt
(b) von der Auswertungseinrichtung (4) auf Grundlage der bei den mehreren Fahrten erfassten Messwerte, der Eigenschaften des Fahrzeugs und der Fähigkeiten der fahrzeugeigenen Einrichtungen für ein autonomes oder pilotiertes Ein- und Ausparken ermitteln zu lassen, ob das Fahrzeug autonom oder pilotiert in die Ziel-Aufstandsfläche ein- und von der Ziel-Aufstandsfläche wieder auszuparken vermag (S2).

3. Fahrerassistenzsystem (1) gemäß einem der Ansprüche 1 oder 2,
**dadurch gekennzeichnet, dass**
das Fahrerassistenzsystem (1) dazu eingerichtet ist, als Messwerte
(a1) wenigstens einen Verlauf des Nick-, Gier- und/oder Wankwinkels gegenüber der Ziel-Aufstandsfläche;
(a2) wenigstens einen Verlauf der Lenkwinkel und/oder des Lenkmoments,
(a3) wenigstens eine Trajektorie;
(a4) Daten, die wenigstens einen Reibungskoeffizienten und/oder eine Sichtbedingung beinhalten oder darauf beruhen; und/oder (a5) Rohdaten und/oder weiterverarbeitete Daten von Umfeldsensorik-Einrichtungen
zu erfassen.

4. Fahrerassistenzsystem (1) gemäß einem der vorhergehenden Ansprüche,
**dadurch gekennzeichnet, dass**
das Fahrerassistenzsystem (1) dazu eingerichtet ist,
in dem Freigabedatensatz zur Wiedererkennung der Ziel-Aufstandsfläche Daten über das Aussehen, Klassifikationsergebnis(se) und/oder die Lage der Ziel-Aufstandsfläche zu speichern.

5. Fahrerassistenzsystem (1) gemäß einem der vorhergehenden Ansprüche,
**dadurch gekennzeichnet, dass**
das Fahrerassistenzsystem (1) dazu eingerichtet ist,
(d) ein fahrzeugexternes Erkennungsmittel, und/oder
(e) ein Car2Infrastruktur-System
zur Wiedererkennung der Ziel-Aufstandsfläche verwenden zu können.

6. Fahrerassistenzsystem (1) gemäß einem der vorhergehenden Ansprüche,
**dadurch gekennzeichnet, dass**
das Fahrerassistenzsystem (1) dazu eingerichtet ist,
mittels fahrzeugeigenen und/oder fahrzeugfremden Einrichtungen dem Nutzer einmalig oder wiederholt dabei zu assistieren, eine geeignete Pose des Fahrzeugs für eine Durchführung eines autonomen oder pilotierten Einparkvorgangs zu erreichen.

7. Fahrerassistenzsystem (1) gemäß Anspruch 6,
**dadurch gekennzeichnet, dass**
das Fahrerassistenzsystem (1) dazu eingerichtet ist,
das Assistieren auf Grundlage von für einen Menschen wahrnehmbaren optischen und/oder akustischen Signalen durchzuführen.

8. Fahrerassistenzsystem (1) gemäß Anspruch 6 oder 7,
**dadurch gekennzeichnet, dass**
das Fahrerassistenzsystem (1) dazu eingerichtet ist,
dem Nutzer dahin zu assistieren, dass
(f) er eine Unterstützung zur Anbringung von wenigstens einer Markierung auf einem Boden, einer Wand und/oder Decke für eine geeignete Pose des Fahrzeugs erhält,
(g) ihm mittels einer Anzeigeeinrichtung angezeigt wird, in welchem Bereich im Nahbereich außerhalb der Ziel-Aufstandsfläche das Fahrzeug für eine geeignete Pose hineinbewegt werden muss, und/oder
(h) ihm zusätzlich Informationen über die Pose signalisiert werden.

9. Verfahren zum Freigeben eines autonomen oder pilotierten Ein- und Ausparkvorgangs bezüglich einer Ziel-Aufstandsfläche mittels eines Fahrzeugs, das über Steuer-, Regel- und Sensoreinrichtungen für einen autonomen oder pilotierten Ein- und Ausparkvorgang verfügt,
wobei
(a) von einem Nutzer ein Fahrzeug wenigstens einmal von einer ersten Position im Nahbereich von und außerhalb einer Ziel-Aufstandsfläche zu einer zweiten Position innerhalb einer Ziel-Aufstandsfläche und von der zweiten Position zu einer ersten Position im Nahbereich von und außerhalb der Ziel-Aufstandsfläche gefahren wird;
(b) während der Fahrt mittels Fahrzeugeigener Sensorik (3) Messwerte erfasst werden;
und **dadurch gekennzeichnet, dass**
(c) von einer Auswertungseinrichtung (4) auf Grundlage der erfassten Messwerte, der Eigenschaften des Fahrzeugs und der Fähigkeiten von fahrzeugeigenen Einrichtungen für ein autonomes oder pilotiertes Ein- und Ausparken ermittelt wird, ob das Fahrzeug autonom oder pilotiert in die Ziel-Aufstandsfläche ein- und von der Ziel-Aufstandsfläche wieder auszuparken vermag; und
(d) im Falle eines positiven Ergebnisses in Schritt (c) ein Freigabedatensatz für ein autonomes oder pilotiertes Ein- und Ausparken bezüglich der Ziel-Aufstandsfläche in einer Speichereinrichtung (5) gespeichert wird.

## Claims

1. Driver assistance system (1) for authorising an autonomous or piloted parking process in which a vehicle enters and leaves a target contact zone, comprising open-loop control devices, closed-loop control devices and sensor devices for an autonomous or piloted parking process involving entering or leaving a zone, wherein the driver assistance system is designed to
(a) detect measured values by means of a vehicle-integrated sensor system (3) during at least one movement of the vehicle, by a user, from a first position near to and outside of a target contact zone to a second position inside a target contact zone, and from the second position back to a first position near to and outside of the target contact zone (S1); and is further **characterised in that**
(b) said assistance system is designed to facilitate an evaluation device (4) in determining, on the basis of the collected measured values, the vehicle characteristics and the capabilities of the vehicle-integrated devices for the purpose of entering or leaving a zone during autonomous or piloted parking, whether the vehicle is capable of parking in the target contact zone in an autonomous or piloted manner and of leaving the target contact zone once again (S2); and
(c) in the case of a positive result in step (b), is designed to store, in a storage device (5), an authorisation data set for entering and leaving the target contact zone during autonomous or piloted parking (S3).

2. Driver assistance system (1) according to claim 1, **characterised in that** the driver assistance system (1) is designed to, in step (a), detect measured values by means of a vehicle-integrated sensor system (3) during a plurality of movements of the vehicle, by a user, from a first position near to and outside of a target contact zone to a second position inside a target contact zone, and from the second position to a first position near to and outside of the target contact zone (S1); and in step
(b), facilitate the evaluation device (4) to determine, on the basis of the measured values collected during the plurality of movements, the vehicle characteristics and the capabilities of the vehicle-integrated devices for the purpose of entering or leaving a zone during autonomous or piloted parking, whether the vehicle is capable of parking in the target contact zone in an autonomous or piloted manner and of leaving the target contact zone once again (S2).

3. Driver assistance system (1) according to either claim 1 or claim 2,
**characterised in that** the driver assistance system (1) is designed to detect
(a1) at least one course of the pitch angle, yaw angle and/or roll angle in relation to the target contact zone,
(a2) at least one course of the steering angle and/or the steering torque,
(a3) at least one trajectory,
(a4) data which contain at least one friction coefficient and/or one visibility condition or relate thereto, and/or
(a5) raw data and/or processed data from environment sensor devices,
as measured values.

4. Driver assistance system (1) according to any of the preceding claims, **characterised in that** the driver assistance system (1) is designed to store data regarding the appearance, classification result(s) and/or the location of the target contact zone in the authorisation data set for the recognition of the target contact zone.

5. Driver assistance system (1) according to any of the preceding claims, **characterised in that** the driver assistance system (1) is designed to be able to use
(d) an identification means outside of the vehicle, and/or
(e) a Car2Infrastructure system
for recognising the target contact zone.

6. Driver assistance system (1) according to any of the preceding claims, **characterised in that** the driver assistance system (1) is designed to assist the user, by means of vehicle-integrated and/or vehicle-external devices, on one or several occasions, in achieving a suitable position of the vehicle in order to carry out an autonomous or piloted parking process.

7. Driver assistance system (1) according to claim 6, **characterised in that** the driver assistance system (1) is designed to provide assistance on the basis of visual and/or acoustic signals which can be perceived by a person.

8. Driver assistance system (1) according to either claim 6 or claim 7, **characterised in that** the driver assistance system (1) is designed to assist the user, such that
(f) the user receives assistance for making at least one mark on a floor, a wall and/or ceiling for a suitable position of the vehicle,
(g) by means of a display device, the user is shown which region just outside of the target contact zone the vehicle has to be moved into for suitable positioning, and/or
(h) additional information regarding the position is signalled to the user.

9. Method for authorising an autonomous or piloted parking process in which a vehicle enters or leaves a target contact zone, comprising open-loop control devices, closed-loop control devices and sensor devices for an autonomous or piloted parking process involving entering or leaving a zone, wherein
(a) a vehicle is moved by a user, at least once, from a first position near to and outside of a target contact zone to a second position inside a target contact zone, and from the second position to a first position near to and outside of the target contact zone;
(b) measured values are detected by a vehicle-integrated sensor system (3) during the movement; and **characterised in that**
(c) an evaluation device (4) determines, on the basis of the detected measured values, the vehicle characteristics and the capabilities of vehicle-integrated devices for the purpose of entering or leaving a zone during autonomous or piloted parking, whether the vehicle is capable of parking in the target contact zone in an autonomous or piloted manner and of leaving the target contact zone once again; and
(d) in the case of a positive result in step (c), an authorisation data set is stored in a storage device (5) for the purpose of entering or leaving a target contact zone during autonomous or piloted parking.

## Revendications

1. Système d'assistance au conducteur (1) pour autoriser une opération autonome ou pilotée de stationnement ou de dégagement par rapport à un contact cible au sol au moyen d'un véhicule, qui dispose de dispositifs de commande, de régulation et de détection pour une opération autonome ou pilotée de stationnement et de dégagement,
dans lequel :
le système d'assistance au conducteur est réglé de manière à :
(a) recueillir des valeurs de mesure (S1) au moyen d'une technologie de détection propre au véhicule (3) pendant au moins un déplacement du véhicule par un utilisateur d'une première position au voisinage et à l'extérieur d'un contact cible au sol à une seconde position sur un contact cible au sol et de la seconde position à nouveau à une première position au voisinage et à l'extérieur du contact cible au sol ; et
**caractérisé en outre en ce que** :
(b) l'on détermine par un dispositif d'évaluation (4) sur la base des valeurs de mesure recueillies, des propriétés du véhicule et des capacités de dispositifs propres au véhicule pour un stationnement et un dégagement autonomes ou pilotés si le véhicule peut de manière autonome ou pilotée stationner sur le contact cible au sol ou se dégager à nouveau du contact cible au sol (S2) ; et,
(c) dans le cas d'un résultat positif à l'étape (b), on mémorise (S3) un jeu de données d'autorisation pour un stationnement et un dégagement autonomes ou pilotés par rapport au contact cible au sol dans un dispositif de mémorisation (5).

2. Système d'assistance au conducteur (1) selon la revendication 1,
**caractérisé en ce que** :
le système d'assistance au conducteur (1) est réglé à l'étape
(a) de manière à recueillir des valeurs de mesure (S1) au moyen d'une technologie de détection propre au véhicule (3) pendant plusieurs déplacements du véhicule par un utilisateur d'une première position au voisinage et à l'extérieur d'un contact cible au sol à une seconde position sur un contact cible au sol et de la seconde position à une première position au voisinage et à l'extérieur du contact cible au sol ; et à l'étape
(b) l'on détermine par le dispositif d'évaluation (4) sur la base des valeurs de mesure recueillies, des propriétés du véhicule et des capacités des dispositifs propres au véhicule pour un stationnement et un dégagement autonomes ou pilotés si le véhicule peut de manière autonome ou pilotée stationner sur le contact cible au sol et se dégager à nouveau du contact cible au sol (S2).

3. Système d'assistance au conducteur (1) selon l'une quelconque des revendications 1 ou 2, **caractérisé en ce que** :
le système d'assistance au conducteur (1) est réglé de manière à mémoriser comme valeurs de mesure
(a1) au moins une variation de l'angle de tangage, de l'angle de lacet et/ou de l'angle de roulis vis-à-vis du contact cible au sol ;
(a2) au moins une variation de l'angle de direction et/ou du moment de direction ;
(a3) au moins une trajectoire ;
(a4) des données qui contiennent au moins un coefficient de frottement et/ou une condition de visée ou reposent sur ceux-ci ; et/ou
(a5) des données brutes et/ou des données retraitées de dispositifs de détection environnementale.

4. Système d'assistance au conducteur (1) selon l'une quelconque des revendications précédentes, **caractérisé en ce que** :
le système d'assistance au conducteur (1) est réglé de manière à mémoriser dans le jeu de données d'autorisation pour reconnaître le contact cible au sol des données sur l'aspect, le ou les résultats de classification et/ou la position du contact cible au sol.

5. Système d'assistance au conducteur (1) selon l'une quelconque des revendications précédentes, **caractérisé en ce que** :
le système d'assistance au conducteur (1) est réglé de manière à pouvoir utiliser :
(d) un moyen de reconnaissance extérieur au véhicule et/ou
(e)un système d'infrastructure de type Car2,
pour reconnaître le contact cible au sol.

6. Système d'assistance au conducteur (1) selon l'une quelconque des revendications précédentes, **caractérisé en ce que** :
le système d'assistance au conducteur (1) est réglé de manière à :
aider l'utilisateur au moyen de dispositifs propres au véhicule et/ou étrangers au véhicule une fois ou de manière répétée à atteindre une disposition appropriée du véhicule pour assurer une opération autonome ou pilotée de stationnement.

7. Système d'assistance au conducteur (1) selon la revendication 6,
**caractérisé en ce que** :
le système d'assistance au conducteur (1) est réglé de manière à :
effectuer l'assistance sur la base de signaux optiques et/ou acoustiques perceptibles pour un homme.

8. Système d'assistance au conducteur (1) selon la revendication 6 ou la revendication 7,
**caractérisé en ce que** :
le système d'assistance au conducteur (1) est réglé de manière à :
assister l'utilisateur pour faire en sorte :
(f) qu'il reçoive un soutien pour appliquer au moins un marquage sur un sol, une paroi et/ou un plafond pour une disposition appropriée du véhicule,
(g) que lui soit indiqué au moyen d'un dispositif d'affichage dans quelle zone au voisinage et à l'extérieur du contact cible au sol le véhicule doit être introduit pour une disposition appropriée et/ou
(h) que lui soient en outre signalisées des informations sur la disposition.

9. Procédé d'autorisation d'une opération autonome ou pilotée de stationnement et de dégagement par rapport à une surface de contact cible au moyen d'un véhicule, qui dispose de dispositifs de commande, de régulation et de détection pour une opération autonome ou pilotée de stationnement et de dégagement,
dans lequel :
(a) un véhicule est déplacé par un utilisateur au moins une fois d'une première position au voisinage et à l'extérieur d'un contact cible au sol à une seconde position à l'intérieur d'un contact cible au sol et de la seconde position à une première position au voisinage et à l'extérieur du contact cible au sol ;
(b) au cours du déplacement, on recueille au moyen d'une technologie de détection (3) des valeurs de mesure ; et
**caractérisé en ce que** :
(c) on détermine par un dispositif d'évaluation (4) sur la base des valeurs de mesure recueillies, des propriétés du véhicule et des capacités de dispositifs propres au véhicule pour une opération autonome ou pilotée de stationnement et de dégagement, si le véhicule peut de manière autonome ou pilotée se mettre en stationnement sur le contact cible au sol et se redégager du contact cible au sol ; et
(d) dans le cas d'un résultat positif à l'étape (c), un jeu de données d'autorisation pour un stationnement et un dégagement autonomes ou pilotés par rapport au contact cible au sol est mémorisé dans un dispositif de mémorisation (5).
